(19) Europäisches Patentamt
European Patent Office
Office européen des brevets

(11) **EP 1 082 833 B1**

(12) **EUROPEAN PATENT SPECIFICATION**

(45) Date of publication and mention
of the grant of the patent:
**27.02.2013 Bulletin 2013/09**

(21) Application number: **99921036.2**

(22) Date of filing: **26.05.1999**

(51) Int Cl.:
**H04L 5/06** (2006.01)    **H04L 27/26** (2006.01)

(86) International application number:
**PCT/IB1999/000953**

(87) International publication number:
**WO 1999/062214 (02.12.1999 Gazette 1999/48)**

(54) **DEVICE FOR MODULATION AND DEMODULATION IN A MULTI-CARRIER SYSTEM**

EINRICHTUNG ZUM MODULIEREN BZW. DEMODULIEREN IN EINEM MEHRTRÄGERSYSTEM

DISPOSITIF DE MODULATION ET DE DEMODULATION DANS UN SYSTEME MULTI-PORTEUSE

(84) Designated Contracting States:
**AT BE CH CY DE DK ES FI FR GB GR IE IT LI LU MC NL PT SE**

(30) Priority: **26.05.1998  SE 9801841**

(43) Date of publication of application:
**14.03.2001  Bulletin 2001/11**

(73) Proprietor: **NERA ASA
5020 Bergen (NO)**

(72) Inventor: **VAHLIN, Anders
N-5050 Nesttun (NO)**

(74) Representative: **Nikolopoulou, Sofia et al
Zacco Sweden AB
P.O. Box 5581
114 85 Stockholm (SE)**

(56) References cited:
EP-A2- 0 656 705     EP-A2- 0 837 582
US-A- 5 313 169     US-A- 5 425 050
US-A- 5 675 572

- IEEE GLOBECOM''94, Volume, November 1994, (San Francisco), G. Cariolaro and F. Vagliani, "An OFDM System with a Half Complexity", pages 237-242, XP000488550
- IEEE TRANSACTIONS ON BROADCASTING WILLIAM Y. ZOU AND YIYAN WU: 'COFDM: An Overview' vol. 41, no. 1, March 1995, pages 1 - 8, XP002921563

**Description**

TECHNICAL FIELD

The present invention relates to a device for modulation and demodulation in a system for high-speed transmission of digital information in several carriers. The invention relates in particular to multi-carrier systems which make use of Offset Quadrature Amplitude Modulation (OQAM).

STATE OF THE ART

In the transmission of a sequence of digital data via different transmission media, the digital data needs in most cases to be converted into an analogue signal by modulatition. A known method of modulation is what is known as multi-carrier modulation, in which a number of modulated carriers are used simultaneously in order to transmit. a sequence of digital data. One way of implementing a system for multi-carrier modulation is to use Fast Fourier Transform (FFT) and/or its inverse (IFFT).

A known application of FFr/iFFT for multi-carrier modulation is what is known as Quadrature Amplitude Modufation (QAM). A disadvantage of QAM is that it can mainly be used in systems using square pulses. In the application of FFT/IFFT on systems using more general pulse shapes, use is therefore often made of what is known as Offset Quadrature Amplitude Modulation (OQAM). The appticatton of FFT/IFFT in an OQAM system is in most cases more complex than the implementation of FFT/IFFT in a QAM system, inter alia because a requirement arises for one or more filter banks.

Another reason why the application of FFT/IFFT in modulation/dermodulation in an OQAM system is of relatively great complexity is that the prior art has required the use of some form of pre-processing of input data to the device used for FFT/IFFT. Corresponding complexity arises in the processing of output data from such a device which is to be connected to an FFT/IFFT, in other. words where there is a need for post-processing. Typical examples of such earlier solutions are described in US 4 300 229 and "An OFDM Scheme with a Half Complexity", "IEEE Journal on Selected Areas in Communication", volume 13, number 9, page 1596, fig. 16.

DESCRIPTION OF THE INVENTION

The problem solved by the invention is that of reducing the complexity of a modulator and/or a demodulator for use in an OQAM system in which FFT/IFFT is used: More specifically, the complexity is reduced by virtue of the fact that, in a modulator or demodulator according to the invention, input data to the modulator and, respectively, output data from the demodulator can be connected directly to the device used for FFT/IFFT. The need for special pre-processing and, respectively, post-processing is therefore eliminated.

The need for special pre-processing in a modulator in an OOAM system with FFT/IFFT is eliminated by virtue of the fact that, in the output signal that is desired from such a modulator, components have been identified, which are each based on Fourier transforms of the real part and, respectively, the imaginary part of a complex input signal. Given that these components have been identified, a processed complex input signal to a modulator and, respectively, a processed complex output signal from a demodulator can be connected directly to means for FFT/IFFT without pre-processing or, respectively, post-processing.

In a modulator according to the invention, output data from the FFT/IFFT, in other words the Fourier transform of the complex input signal, is processed in two separate branches, a first and a second branch, which branches each contain a pulse-shaping means, which means are designed and connected in such a manner that the need for pre-processing is eliminated. Output data from the pulse-shaping means is then summed, and the desired output signal is obtained. In a preferred embodiment, the pulse-shaping means comprise a signal converter and a filter bank.

In a demodulator according to the invention, input data to an FFT/IFFT is processed in two separate branches, a first and a second branch, which branches each contain a means for pulse-matching, which means are designed and connected in such a manner that the need for post-processing is eliminated. Output data from the means for pulse-matching is then summed, and the desired input signal to the FFT/IFFT is obtained. In a preferred embodiment, the means for pulse-matching comprise a signal converter and a filter bank.

BRIEF DESCRIPTION OF THE DRAWINGS

The invention will be described in detail below with the aid of exemplary embodiments and the appended drawings, in which

Fig. 1 shows an example of the principle of OQAM,

Fig. 2    shows a basic block diagram of a modulator according to the invention,
Fig. 3    shows a block diagram of a modulator according to the invention,
Fig. 4    shows a more detailed block diagram of a first signal converter,
Fig. 5    shows a more detailed block diagram of a second signal converter,
Fig. 6    shows a filter bank for use in a modulator,
Fig. 7    shows a basic block diagram of a demodulator according to the invention,
Fig. 8    shows a block diagram of a demodulator according to the invention, and
Fig. 9    shows a filter bank for use in a demodulator.

PREFERRED EMBODIMENTS

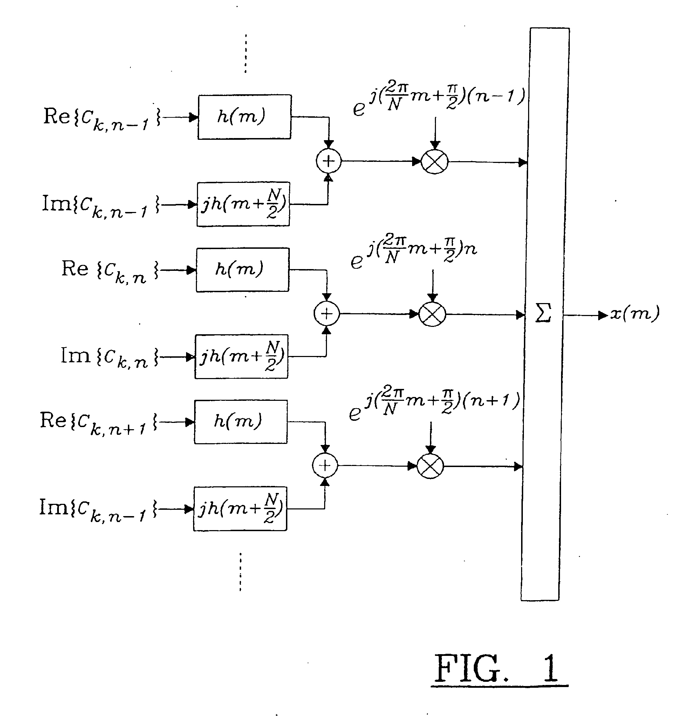

In order to facilitate the understanding of the rest of the description of the invention, Fig. 1 shows the principle of a multi-carrier modulator according to the OQAM principle. The modulator in Fig. 1 has N inputs for complex numbers, in other words there are inputs for N real parts and N imaginary parts. Of these N inputs, a detail from (n-1) to (n+1) is shown.

A number of digital carriers, a maximum of N, are connected to the modulator, the input data in each carrier being a complex number $c$ with a real part $a$ and an imaginary part $b$. In other words, the input data in each carrier can be described as: $c = a+jb$.

The letter $n$ is used hereinafter as the designation for carrier number, and the letter $k$ is used as the designation for the times of input data. Consequently, input data at time $k$ on carrier $n$ can be written as: $C_{k\cdot n}=a_{k,n}+jb_{k,0}$. If the input data to the carriers is seen as a sequence, the letter $k$ in other words also becomes the order number of input data to the carriers.

Output data from the modulator in Fig. 1 is obtained by the expression

$$x(m) = \sum_{k=0}^{\infty}\sum_{n=0}^{N-1}\left[a_{k,n}h(m-kN) + jb_{k,n}h(m-kN+\frac{N}{2})\right]e^{j(\frac{2\pi}{N}m+\frac{\pi}{2})n} \qquad (1)$$

Fig. 1 shows that the real part and, respectively, the imaginary part of the input signal in each carrier are connected to a filter. These filters will be described only briefly here, as their exact construction is not of essential importance to the invention.

The impulse response of the filters has been given the designation $h$, and what are known as Finite Impulse Response filters (FIR filters) are selected as the filters in a preferred embodiment. The main function of the filters is to focus the energy of the signal within the desired frequency range.

Each filter in Fig. 1 is to generate N items of output data for each symbol (a,b) coming into the filter. In order for it to be possible to achieve this, a time variable $m$ is introduced into the filters, which time variable is adjusted upwards N times each time upward adjustment of the abovementioned time variable $k$ takes place.

The expression (1) can also be written as

$$x(m) = \sum_{k=0}^{\infty}\left[\sum_{n=0}^{N-1}a_{k,n}e^{j\frac{2\pi}{N}(m+\frac{N}{4})n}h(m-kN) + j\sum_{n=0}^{N-1}b_{k,n}e^{j\frac{2\pi}{N}(m+\frac{N}{4})n}h(m-kN+\frac{N}{2})\right] \qquad (2)$$

The sums in expression (2) can then be identified as inverse FFFs (IFFTs) with N points, which means that (2) can be expressed as

$$x(m) = \sum_{k=0}^{\infty}A_k(m+\frac{N}{4})h(m-kN) + \sum_{k=0}^{\infty}jB_k(m+\frac{N}{4})h(m-kN+\frac{N}{2}) \qquad (3)$$

where $A_k(m) = \text{IFFT}(a_{k,n})$ and $B_k(m) = \text{IFFT}(b_{k,n})$.

As both $a_{k,n}$ and $b_{k,n}$ are sequences of real numbers, the two IFFTs can be combined as follows:

$$\text{First let } X_k(m) = \text{IFFT}(a_{k,n}+jb_{k,n}) \tag{4}$$

The transforms of $a_{k,n}$ and $b_{k,n}$ can be calculated as:

$$A_k(m)=0.5(X_k(m)+X_k^*(N-m)) \tag{5}$$

$$jB_k(m)=0.5(X_k(m)-X_k^*(N-m)) \tag{6}$$

where $X^-$ is the complex conjugate of X.

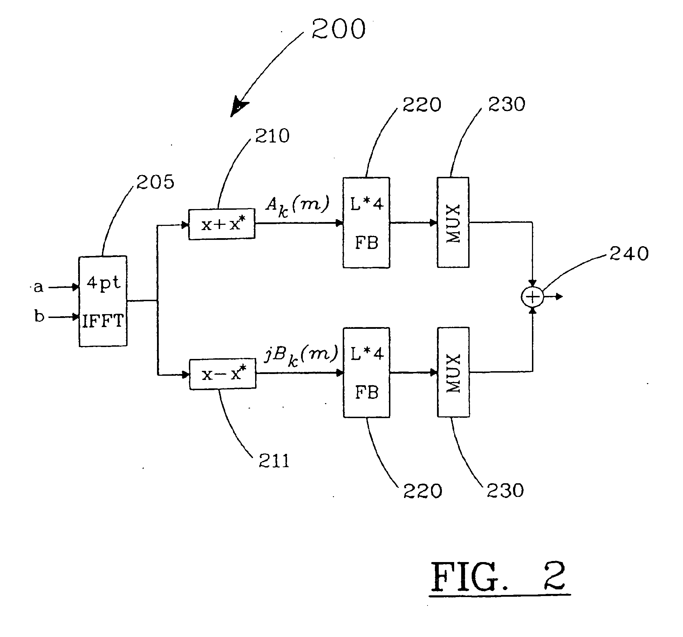

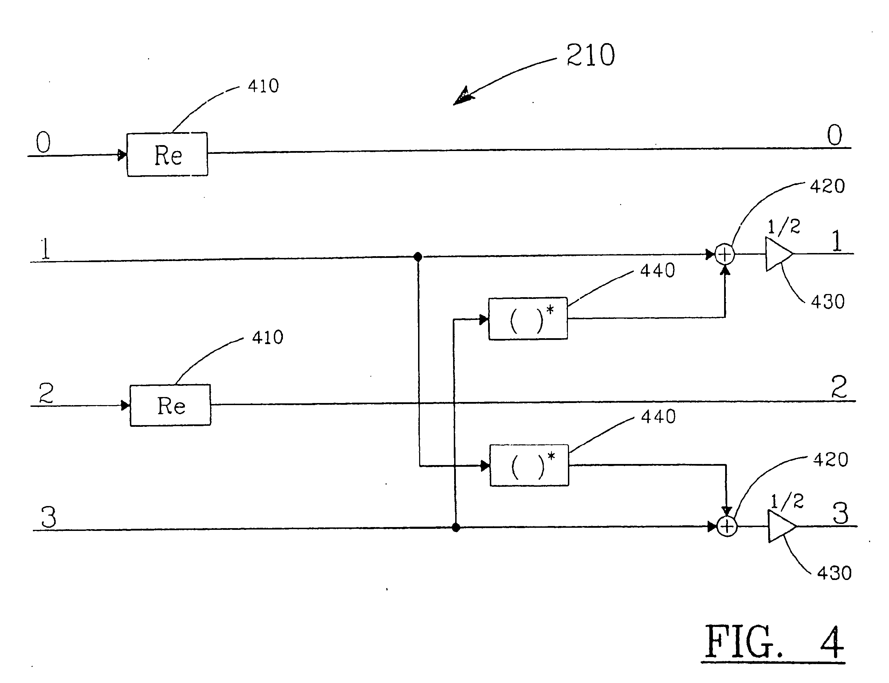

Fig. 2 shows a basic block diagram of a modulator 200 which is based on expressions (5) and (6). According to what has been described above, two numbers a and b, which are the real and, respectively, the imaginary part in a carrier, are used as input data to a device 205 for an N point IFFT. In other words, the device 205 for IFFT has N inputs and, respectively, outputs. In the example shown in Fig. 2, a 4-point IFFT is used, where the figure 4 is to be seen only as an example; other sizes of IFFT can of course also be used.

Output data from the IFFT 205 can, using designations according to (4) above, be written as $X_k(m)$, in other words IFFT(a+jb). Output data from the IFFT is processed in a first, "upper" branch and a second, "lower" branch.

In each branch, there are pulse-shaping means which, in a preferred embodiment, consist of a signal converter 210, 211 and a filter bank 220, which each have N inputs and N outputs. Output data from the filter bank 220 is connected to a means 230 for converting between serial and parallel form, in a preferred embodiment a multiplexer (MUX), after which data from the two branches is summed in a summator 240. After summation, the desired term x(m) in (3) above is obtained.

As can be seen from expressions (5) and (6) above, the expressions in each branch are also to be multiplied by 0.5, which will be explained in greater detail below.

Processing of output data from the IFFT is carried out according to expression (5) in the signal converter in the upper branch, and according to expression (6) in the signal converter in the lower branch.

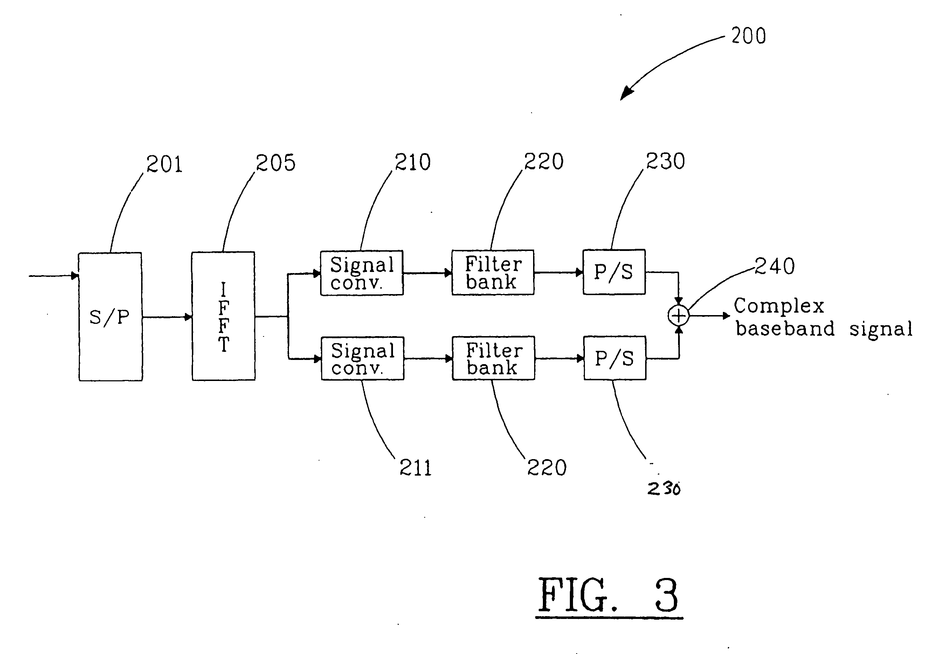

Fig. 3 shows a more basic block diagram of a modulator 200 according to the invention, where the initial means 201 for converting data from serial to parallel form can also be seen.

Fig. 4 shows a more detailed block diagram of a signal converter 210 according to the invention for use in the upper branch for the special case N=4. In other words, the signal converter 210 in Fig. 4 has four inputs and four outputs. As also emerges from Fig. 4, the signal converter 210 in the upper branch has the following function: output data from a given output number *i* of the signal converter in the upper branch consists of half the sum of data at input number *i* and the complex conjugate of the data at the input of which the number reduced modulo N is the difference between N and i. If x is used to designate input data to the signal converter, and y is the output data of the signal converter, y can be described as:

$y_i = (x_i+x^*_f)$, where f = N-i mod. N. This therefore corresponds to expression (5) above, with the exception of multiplication by the factor 0.5.

In order to effect multiplication by the factor 0.5, and thus achieve equality between the output signal from the signal converter and expression (5) above, use is made of one of the two following principles, this being shown in Fig. 4.

-   In the event that the principle described above for connections and addition of input data to the signal converter means that a complex number is to be added to its own complex conjugate, the result of this addition is always equal to the real part of the complex number multiplied by two. If this sum is to be multiplied by 0.5, the product of this multiplication is therefore equal to the real part of the number. In these cases. in other words, the desired result can be achieved by simply introducing means 410 for separating the real part of the number, which in the present example (N=4) is done at the inputs 0 and 2.

- In the event that the principle described above for connections and addition of input data to the signal converter means that a complex number is to be added to the complex conjugate of another number, this is effected by means 440 for complex conjugation and means 420 for addition. The output signal from the addition means 420 is then used as the input signal to a means 430 for multiplication by 0.5.

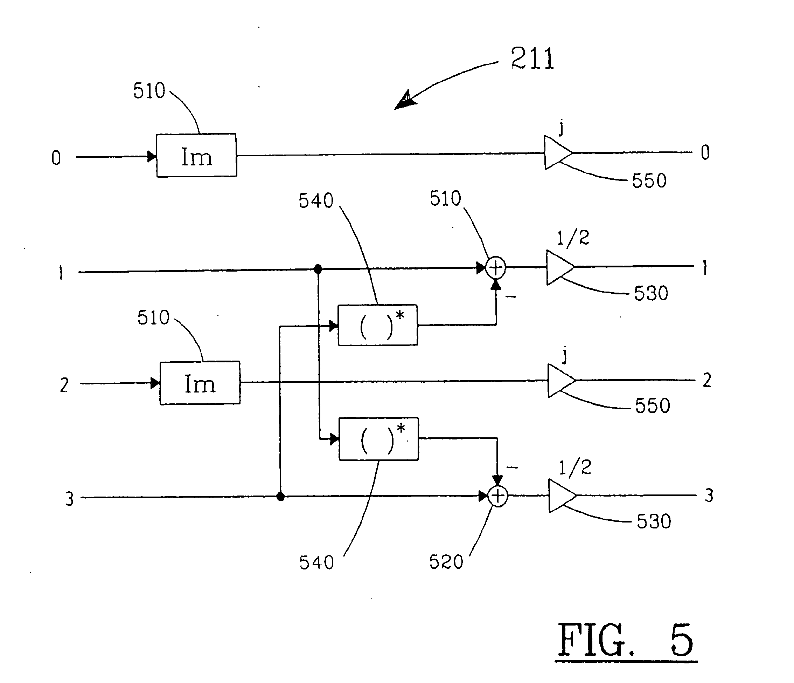

Fig. 5 shows a block diagram corresponding to that in Fig. 4 for a signal converter 211 for use in the lower branch for the same special case, in other words N=4. As can be seen from Fig. 5, the signal converter 211 in the lower branch has the following function: the output data from a given output number *i* of the signal converter in the first branch consists of half the difference between the data at input number *i* and the complex conjugate of the data at the input of which the number taken modulo N is the difference between N and i. In a manner corresponding to that described in connection with Fig. 4, the output data from this signal converter corresponds to $y_i = (x, -x^*,)$ where f = N-i mod. N. Output data from this signal converter therefore corresponds to expression (6) above, with the exception of the factor 0.5, which is brought about according to one of the two following principles, this being shown in Fig. 5.

- In the event that the principle described above for connections and subtraction of input data to the filter means that a complex number is to be subtracted from its own complex conjugate, the result of this addition is always equal to the imaginary part of the complex number multiplied by two times the complex number *j*. If this sum is to be multiplied by 0.5, the product of this multiplication is therefore equal to the imaginary part of the number multiplied by the complex number *j*. In these cases, in other words, the desired result can be achieved by simply introducing means 510 for separating the imaginary part of the number and connecting this to means 550 for multiplication by *j*, which in the present example case (N=4) is done at the inputs 0 and 2.

- In the event that the principle described above for connections and subtraction of input data to the filter means that a complex number is to be subtracted from the complex conjugate of another number, this is effected by means 520 for subtraction and means for complex conjugation 540. The output signal from the subtraction means 520 is then used as the input signal to a means 530 for multiplication by 0.5.

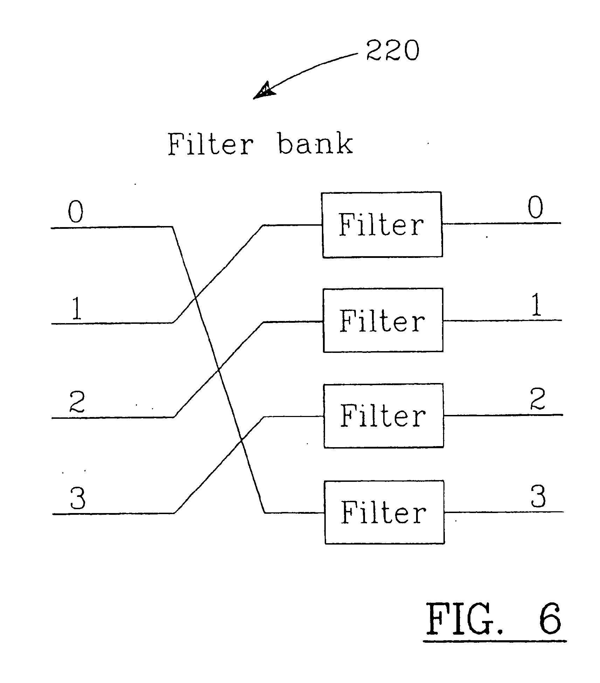

Fig. 6 shows how the connections to the filter banks 220 in the upper and lower branches are made in order to achieve the desired function. The input data to a given filter with the number i of the filter bank 220 is the data from that output on the signal converter of which the number corresponds (i+N/4) reduced modulo N, in other words output number ((i+N/4) mod. N) of the signal converter. The output on each filter is connected to that output on the filter bank 220 which has the corresponding number.

Therefore, in the signal converters 220 in the upper and the lower branch, the IFFT of a and, respectively, b has been distinguished from the inverse Fourier transform of a complex number with real and imaginary parts a and, respectively, b.

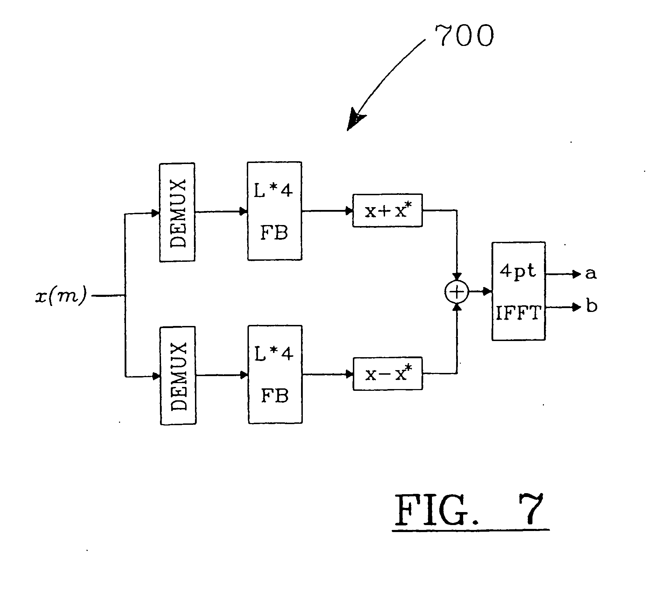

Fig. 7 shows a basic block diagram of a demodulator 700 according to the invention. Input data to the demodulator is digital data x(m) of the type generated by the modulator according to the invention. Desired output data from the demodulator is complex digital data c, where c = a+jb, which corresponds to the input data to the modulator according to the invention.

A demodulator according to the invention is in principle a "reflection" of the modulator according to the invention described above. For this reason, the demodulator will be described somewhat less extensively than the modulator.

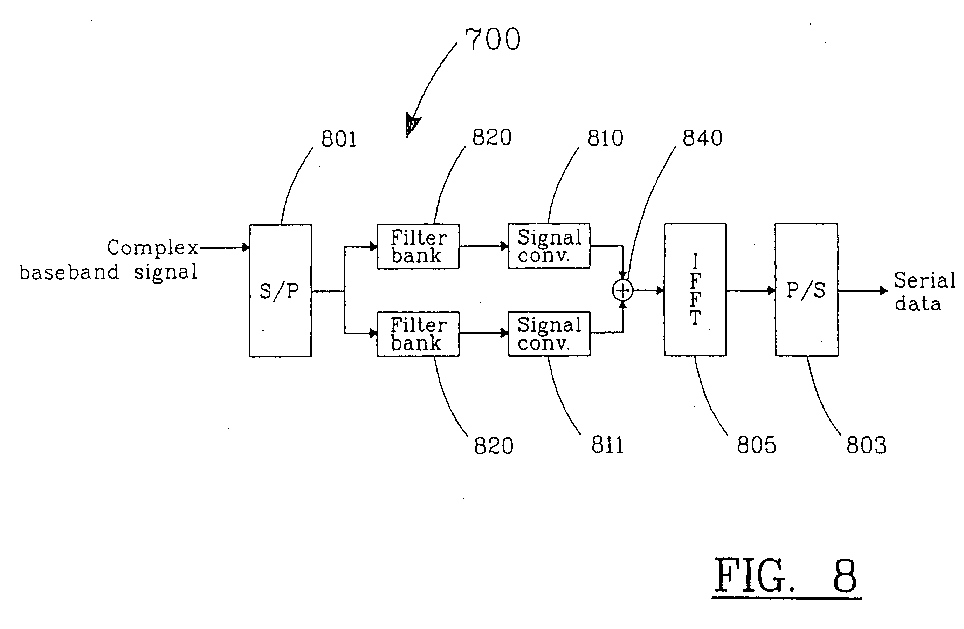

Fig. 8 shows in greater detail the principle of a demodulator according to the invention. As can be seen from Fig. 8, the demodulator according to the invention comprises components which correspond to the components in the modulator. The components in the demodulator are, however, interconnected in a slightly different order than those in the modulator.

The input signal received in the demodulator is connected first to a means 801 for serial/parallel conversion. The received data is then processed separately in a first, "upper", and a second, "lower" branch. Both the upper and the lower branches comprise means for pulse-matching which, in a preferred embodiment, comprise a signal converter 810, 811 and a filter bank 820 which both have N inputs and, respectively, outputs.

In the modulator, the filters in the filter banks have the function of shaping the signal (the pulses) in the desired manner. In the demodulator 700, filters of the same construction as in the modulator are used but the function of the filters in the demodulator is to perform what is known as matched filtering.

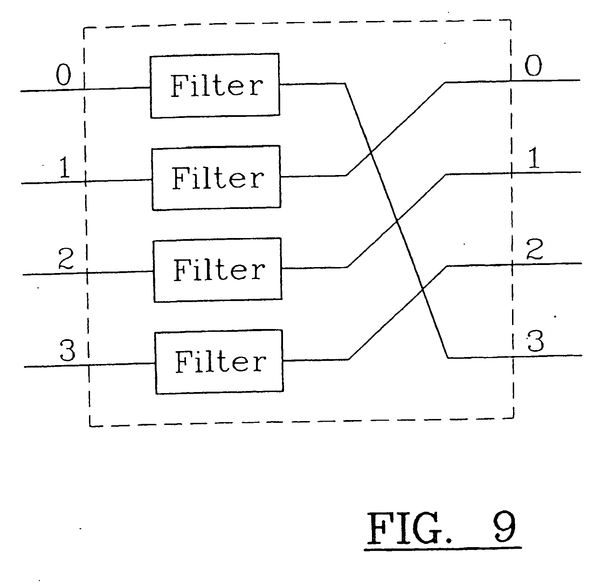

The construction of the filters and the filter banks 820 in the demodulator 700 is the same as that of those used in the modulator, but they differ with regard to the manner in which they are connected at their inputs and outputs, which will be described in greater detail below in connection with Fig. 9.

In the demodulator, as can be seen from Fig. 9, the input data to each filter consists of the input data to that input on the filter bank which has the same number as the filter. The output data at a given output *i* from the filter bank consists of the output data from the filter of which the number is the number of the filter added to N/4, and reduced modulo N, in other words filter ((i+N/4) mod. N).

As can also be seen from Fig. 8, the output signals from the signal converters are summed, after which the sum is connected to a means for IFFT, after which output data is converted from parallel to serial form.

As far as function, construction and connection are concerned, the signal converters in the upper and, respectively, the lower branch in the demodulator are identical to corresponding signal converters in a modulator according to the invention, for which reason the description of these is not repeated here.

The two terms FFT and IFFT have been used throughout above as the means for Fourier transform. These two terms have been used together due to the fact that, although the invention makes use in a preferred embodiment of IFFT, the invention also includes the use of FFT, as the device according to the invention functions irrespective of whether it is IFFT or it is inverse FFT which is used.

## Claims

1. Device (200) for modulation in a system for transmission of serial digital data information by means of multi-carrier offset quadrature amplitude modulation, which device comprises serial-to-parallel converting means (201) for converting incoming data $C_{k,n}$, where $C_{k,n}$ is a complex number consisting of a real part $a_{k,n}$ and an imaginary part $b_{k,n}$, from serial to parallel signal form, transformation means (205) with N complex inputs and outputs for producing an inverse Fourier transformation $IFFT(a_{k,n}+jb_{k,n})$ of the parallel signal form of the incoming data, and also a first and a second pulse shaping means (210, 211; 220) arranged in in respective ones of first and second branches and both having N complex inputs connected to corresponding ones of said N complex outputs of said transformation means, data from which branches is converted to serial form by a means (230) for converting data from parallel to serial form and then is summed in a summator (240),
   **characterized in that**:

   - the means (201) for converting data from serial to parallel signal form is connected directly to the means (205) for Fourier transformation,
   - each pulse shaping means comprises a signal converter (210,211) and a filter bank (220), which each have N complex inputs and outputs,
   - the signal converter (210) in the first branch and the signal converter (211) in the second branch comprise a first means for separating $IFFT(a_{k,n})$ from $IFFT(a_{k,n}+jb_{k,n})$ and a second means for separating $IFFT(b_{k,n})$ from $IFFT(a_{k,n}+Jb_{k,n})$, respectively,
   - the $IFFT(a_{k,n})$ is separated from $IFFT(a_{k,n}+jb_{k,n})$ by the first means by the output of data from a given output number *i* of the signal converter (210) in the first branch consisting of half the sum of data at input number i and the complex conjugate of the data at the input of which taken modulo N is the difference between N and *i*,
   - the $IFFT(b_{k,n})$ is separated from $IFFT(a_{k,n}+jb_{k,n})$ by the second means by the output of data from a given output number *i* of the signal converter (211) in the second branch consisting of half the difference between data at input number *i* and the complex conjugate of the data at the input of which the number taken modulo N is the difference between N and *i*, and
   - input data to a filter *i* in said filter bank (220) in the first and second branches is the data from that output on the respective one of the signal converters (210,211) of which the number corresponds to (*i*+N/4) reduced modulo N, in other words output number ((*i*+N/4)modN) of the respective signal converter.

2. Device (700) for demodulation in a system for transmission of serial digital information by means of multi-carrier Offset Quadrature Amplitude Modulation, which device comprises converting means (801) for converting a serial flow of incoming digital numbers x(m), where x(m) is a complex number consisting of a real part and an imaginary part, from serial to parallel signal form, transformation means (805) for inverse Fourier transformation (IFFT) with N inputs and outputs, at least two means for pulse matching (820, 810; 820; 811) arranged in respective ones of a first and a second branch and both having N inputs being connected to corresponding outputs of said converting means (801), data from which branches is summed in a summator (840), and also means (803) for converting output data from the transformation means (805) from parallel to serial signal form, **characterized** i n that:

   the means (805) for Fourier transformation is connected directly to the means (803) for converting the output data from parallel to serial signal form,
   each means for pulse matching comprises a signal converter (810, 811) and a filter bank (820) which both have N inputs and outputs,
   the output data from a given output number *i* of the signal converter (810) in the first branch consists of half the sum of the data at input number i and the complex conjugate of the data at the input of which the number taken modulo N is the difference between N and I, and
the output data from a given output number *i* of the signal converter (811) in the second branch consists of half the difference between the data at input number *i* and
the complex conjugate of the data at the input of which the number taken modulo N is the difference between N and i.

3. Device according to claim 2, according to which the output data at a given output *i* from the filter bank (820) consists of the output data from the filter of which the number is the number of the filter added to N/4, and reduced modulo N, in other words filter ((i+N/4) mod N).

**Patentansprüche**

1. Einrichtung (200) zum Modulieren in einem System zur Übertragung serieller digitaler Dateninformationen mittels Mehrträger-Offset-Quadratur-Amplitudenmodulation, welche Einrichtung Seriell-zu-Parallel-Umwandlungsmittel (201) zur Umwandlung eingehender Daten $C_{k,n}$, wobei $C_{k,n}$ eine komplexe Zahl bestehend aus einem reellen Teil $a_{k,n}$ und einem imaginären Teil $b_{k,n}$ ist, von der seriellen zur parallelen Signalform, Umformungsmittel (205) mit N komplexen Eingängen und Ausgängen zur Herstellung einer inversen Fouriertransformation IFFT$(a_{k,n}+jb_{k,n})$ der parallelen Signalform der eingehenden Daten sowie ein erstes und ein zweites jeweils in einem ersten und in einem zweiten Zweig angeordnetes Impulsformungsmittel (210, 211; 220), die beide N komplexe Eingänge aufweisen, die mit entsprechenden der N komplexen Ausgänge des Umformungsmittels verbunden sind, wobei die Daten aus diesen Zweigen in die serielle Form mittels eines Mittels (230) zur Umwandlung von Daten von der parallelen zur seriellen Form umwandelt und dann in einem Summierer (240) summiert werden, umfasst, **dadurch gekennzeichnet, dass**:

   - das Mittel (201) zur Umwandlung von Daten von der seriellen in die parallele Signalform direkt mit dem Mittel (205) für die Fouriertransformation verbunden ist,
   - jedes Impulsformungsmittel einen Signalwandler (210, 211) und eine Filterbank (220) mit jeweils N komplexen Eingängen und Ausgängen umfasst,
   - der Signalwandler (210) im ersten Zweig und der Signalwandler (211) im zweiten Zweig jeweils ein erstes Mittel zum Trennen der IFFT$(a_{k,n})$ von IFFT$(a_{k,n}+jb_{k,n})$ und ein zweites Mittel zum Trennen der IFFT$(b_{k,n})$ von IFFT$(a_{k,n}+jb_{k,n})$ umfasst,
   - die IFFT$(a_{k,n})$ von der IFFT$(a_{k,n}+jb_{k,n})$ mittels des ersten Mittels durch die Datenausgabe von einer bestimmten Ausgangsnummer i des Signalwandlers (210) im ersten Zweig getrennt wird, bestehend aus der Hälfte der Summe von Daten an der Eingangsnummer i und dem komplexen konjugierten Wert der Daten am Eingang, dessen Modulo N die Differenz zwischen N und i ist,
   - die IFFT$(b_{k,n})$ von der IFFT$(a_{k,n}+jb_{k,n})$ mittels des zweiten Mittels durch die Datenausgabe von einer bestimmten Ausgangsnummer i des Signalwandlers (211) im zweiten Zweig getrennt wird, bestehend aus der Hälfte der Differenz zwischen Daten an der Eingangsnummer i und dem komplexen konjugierten Wert der Daten am Eingang, dessen Modulo N die Differenz zwischen N und i ist, und
   - die Eingangsdaten eines Filters i in der Filterbank (220) im ersten und zweiten Zweig die Daten desjenigen Ausgangs am Signalwandler (210, 211) sind, dessen Nummer (i+N/4) reduziert Modulo N entspricht, in anderen Worten Ausgangsnummer ((i+N/4)modN) des entsprechenden Signalwandlers.

2. Einrichtung (700) zum Demodulieren in einem System zur Übertragung serieller digitaler Informationen mittels Mehrträger-Offset-Quadratur-Amplitudenmodulation, welche Einrichtung Umwandlungsmittel (801) zur Umwandlung eines seriellen Stroms eingehender digitaler Zahlen x(m), wobei x(m) eine komplexe Zahl bestehend aus einem reellen Teil und einem imaginären Teil ist, von der seriellen zur parallelen Signalform, Umformungsmittel (805) für die inverse Fouriertransformation (IFFT) mit N Eingängen und Ausgängen, mindestens zwei jeweils in einem ersten und in einem zweiten Zweig angeordnete Impulsanpassungsmittel (820, 810; 820; 811), die beide N Eingänge aufweisen, die mit entsprechenden Ausgängen des Umwandlungsmittels (801) verbunden sind, wobei die Daten aus diesen Zweigen in einem Summierer (840) summiert werden, sowie Mittel (803) zur Umwandlung von Ausgangsdaten vom Umformungsmittel (805) von der parallelen in die serielle Signalform umfasst, **dadurch gekennzeichnet, dass**:

   das Mittel (805) für die Fouriertransformation direkt mit dem Mittel (803) zur Umwandlung der Ausgangsdaten von der parallelen in die serielle Signalform verbunden ist,
   jedes Impulsanpassungsmittel einen Signalwandler (810, 811) und eine Filterbank (820) mit jeweils N Eingängen und Ausgängen umfasst,
die Ausgangsdaten von einer bestimmten Ausgangsnummer *i* des Signalwandlers (810) im ersten Zweig aus der Hälfte der Summe von Daten an der Eingangsnummer *i* und dem komplexen konjugierten Wert der Daten am Eingang, dessen Modulo N die Differenz zwischen N und I ist, bestehen, und die Ausgangsdaten von einer bestimmten Ausgangsnummer *i* des Signalwandlers (811) im zweiten Zweig aus der Hälfte der Differenz zwischen den Daten an der Eingangsnummer *i* und dem komplexen konjugierten Wert der Daten am Eingang, dessen Modulo N die Differenz zwischen N und i ist, bestehen.

3. Einrichtung nach Anspruch 2, bei welcher die Ausgangsdaten an einem bestimmten Ausgang *i* der Filterbank (820) aus den Ausgangsdaten des Filters bestehen, dessen Nummer die Nummer des Filters mit N/4 addiert und reduziert Modulo N ist, in anderen Worten Filter ((i+N/4) mod N).

**Revendications**

1. Dispositif (200) de modulation dans un système de transmission d'informations de données numériques sérielles au moyen de la modulation multiple porteuse en quadrature d'amplitude décalée, ledit dispositif comprenant des moyens convertisseurs série-parallèle (201) pour la conversion de données entrantes $C_{k,n}$, $C_{k,n}$ étant un nombre complexe constitué d'une partie réelle $a_{k,n}$ et d'une partie imaginaire $b_{k,n}$, du format de signal sériel au format de signal parallèle, des moyens de transformation (205) avec N entrées et sorties complexes pour produire une transformation inverse de Fourier (IFFT($a_{k,n}+jb_{k,n}$) du format de signal parallèle des données entrantes, ainsi que des premier et deuxième moyens conformateurs d'impulsions (210, 211; 220) agencés chacun dans une première et une deuxième branche et les deux ayant N entrées complexes reliées à des sorties correspondantes desdites N sorties complexes desdits moyens de transformation, des données desquelles branches sont converties au format sériel par un moyen (230) pour convertir des données du format parallèle au format sériel et ensuite additionnées dans un sommateur (240), **caractérisé en ce que** :

   - le moyen (201) de conversion des données du format de signal sériel au format de signal parallèle est directement relié au moyen (205) pour la transformation de Fourier,
   - chacun des moyens conformateurs d'impulsions comprend un convertisseur de signal (210, 211) et un banc de filtres (220) ayant chacun N entrées et sorties complexes,
   - le convertisseur de signal (210) dans la première branche et le convertisseur de signal (211) dans la deuxième branche comprennent respectivement un premier moyen pour séparer l'IFFT($a_{k,n}$) de l'IFFT($a_{k,n}+jb_{k,n}$) et un deuxième moyen pour séparer l'IFFT($b_{k,n}$) de l'IFFT($a_{k,n}+jb_{k,n}$),
   - l'IFFT($a_{k,n}$) est séparé de l'IFFT($a_{k,n}+jb_{k,n}$) par le premier moyen par la sortie de données d'un sortie donnée numéro *i* du convertisseur de signal (210) dans la première branche, constituées de la moitié de la somme de données à l'entrée numéro *i* et du complexe conjugué des données à l'entrée dont le numéro pris modulo N est la différence entre N et *i*,
   - l'IFFT($b_{k,n}$) est séparée de l'IFFT($a_{k,n}+jb_{k,n}$) par le deuxième moyen par la sortie de données à partir d'une sortie donnée numéro *i* du convertisseur de signal (211) dans la deuxième branche, constituées de la moitié de la différence entre des données à l'entrée numéro *i* et le complexe conjugué des données à l'entrée dont le numéro pris modulo N est la différence entre N et *i*,
   - les données d'entrée à un filtre *i* dans ledit banc de filtres (220) dans la première et deuxième branche sont les données provenant de la sortie sur l'un respectif des convertisseurs de signal (210, 211) dont le numéro correspond à (*i*+N/4) réduit modulo N, en d'autres mots la sortie numéro ((*i*+N/4) mod N) du convertisseur de signal respectif.

2. Dispositif (700) de démodulation dans un système de transmission d'informations numériques sérielles au moyen de la modulation multiple porteuse en quadrature d'amplitude décalée, ledit dispositif comprenant des moyens de conversion (801) pour convertir un flux sériel de nombres numériques x(m) entrants, x(m) étant un nombre complexe constitué d'une partie réelle et d'une partie imaginaire, du format de signal sériel au format de signal parallèle, des moyens de transformation (805) pour une transformation inverse de Fourier (IFFT) avec N entrées et sorties, au moins deux moyens adaptateurs d'impulsions (820, 810; 820; 811) agencés chacun dans une première et une deuxième branche et les deux ayant N entrées étant reliées à des sorties correspondantes desdits moyens de conversion (801), des données desquelles branches sont additionnées dans un sommateur (840), et également des moyens (803) pour convertir des données de sortie provenant des moyens de transformation (805) d'un format de signal parallèle à un format de signal parallèle, **caractérisé en ce que** :

- le moyen (805) pour la transformation de Fourier est directement relié au moyen (803) de conversion des données de sortie du format de signal parallèle au format de signal sériel,

- chaque moyen adaptateur d'impulsions comprend un convertisseur de signal (810, 811) et un banc de filtres (820), tous les deux ayant N entrées et sorties,

- les données de sortie provenant d'une sortie donnée numéro $i$ du convertisseur de signal (810) dans la première branche sont constituées de la moitié de la somme des données à l'entrée numéro $i$ et du complexe conjugué des données à l'entrée dont le numéro pris modulo N est la différence entre N et I, et

- les données de sortie provenant d'une sortie donnée numéro $i$ du convertisseur de signal (811) dans la deuxième branche sont constituées de la moitié de la différence entre les données à l'entrée numéro $i$ et le complexe conjugué des données à l'entrée dont le numéro pris modulo N est la différence entre N et $i$.

3. Dispositif selon la revendication 2, selon lequel les donnes de sortie à une sortie donnée $i$ provenant du banc de filtres (820) sont constituées des données de sortie du filtre dont le numéro est le numéro du filtre additionné à N/4 et réduit modulo N, en d'autres mots le filtre ($(i+N/4)$ mod N).

$$\text{Re}\{C_{k,n-1}\} \longrightarrow \boxed{h(m)}$$

$$\text{Im}\{C_{k,n-1}\} \longrightarrow \boxed{jh(m+\tfrac{N}{2})}$$

$$e^{j(\frac{2\pi}{N}m+\frac{\pi}{2})(n-1)}$$

$$\text{Re}\{C_{k,n}\} \longrightarrow \boxed{h(m)}$$

$$\text{Im}\{C_{k,n}\} \longrightarrow \boxed{jh(m+\tfrac{N}{2})}$$

$$e^{j(\frac{2\pi}{N}m+\frac{\pi}{2})n}$$

$$\text{Re}\{C_{k,n+1}\} \longrightarrow \boxed{h(m)}$$

$$\text{Im}\{C_{k,n-1}\} \longrightarrow \boxed{jh(m+\tfrac{N}{2})}$$

$$e^{j(\frac{2\pi}{N}m+\frac{\pi}{2})(n+1)}$$

$$\Sigma \longrightarrow x(m)$$

## FIG. 1

FIG. 2

FIG. 3

EP 1 082 833 B1

FIG. 4

FIG. 5

220

## Filter bank

FIG. 6

EP 1 082 833 B1

700

FIG. 7

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4300229 A

**Non-patent literature cited in the description**

- An OFDM Scheme with a Half Complexity. *IEEE Journal on Selected Areas in Communication,* vol. 13 (9), 1596